# EUROPEAN PATENT APPLICATION

(11) **EP 4 769 377 A1**
(43) Date of publication of application: **01.07.2026**
(21) Application number: 25226833.9
(22) Date of filing: 23.12.2025
(51) Int. Cl.: G09G 3/3208

(54) **DISPLAY DEVICE AND METHOD THEREOF**

(30) Priority: 27.12.2024 KR 20240198724
(71) Applicant: LG Electronics Inc., Yeongdeungpo-gu Seoul 07336 (KR)
(72) Inventor: KIM, Yunam, 07796 Seoul (KR); KANG, Sinan, 07796 Seoul (KR); HONG, Nayeong, 07796 Seoul (KR); KIM, Yeonjin, 07796 Seoul (KR)
(74) Representative: Vossius & Partner Patentanwälte Rechtsanwälte mbB

(57) **Abstract**

The present disclosure relates to a display device and a method thereof. A display device according to an embodiment of the present disclosure may include: a display panel which has light transmissivity; a light blocking film which blocks light transmitted through the display panel; and a controller, and the controller may confirm a light blocking state of the display panel corresponding to a region where the light is blocked within an entire region of the display panel, determine a setting related to an output of a screen through the display panel based on the light blocking state, output a first image including a background through the display panel when the determined setting is a first setting corresponding to light blocking, and output a second image in which the background is removed from the first image through the display panel when the determined setting is a second setting corresponding to light transmission.

## Description

### CROSS-REFERENCE TO RELATED APPLICATIONS

This application claims priority to Korean Patent Application No. 10-2024-0198724, filed in the Republic of Korea on December 27, 2024, the entire contents of which are hereby expressly incorporated by reference into the present application.

### BACKGROUND

### Field of the Invention

The present disclosure relates to a display device and a method thereof, and more particularly, to a display device including a transparent display panel and a method thereof.

### Discussion of the Related Art

With the development of the informatization society, the demands for display devices are also increasing in various forms, and in recent years, various display devices including Liquid Crystal Display Device (LCD), Plasma Display Panel (PDP), Electro luminescent Display (ELD), Vacuum Fluorescent Display (VFD), Organic Light Emitting Diode (OLED), etc., have been studied and used.

Among them, an LCD panel includes a TFT substrate and a color substrate facing each other with a liquid crystal layer interposed therebetween, and can display an image by using light provided from a backlight unit. In addition, an OLED panel can display the image by depositing an organic layer that can autonomously emit light on a substrate with a transparent electrode.

In recent years, extensive research has been conducted on a transparent display panel that can not only display an image to a user but also allow the user to see a rear of the display panel.

### SUMMARY

In view of the above, an object of the present disclosure is to solve the above-described problems and other problems.

Another object of the present disclosure is to provide a display device and a method thereof which may control a setting related to an output of an image through a transparent display panel according to a light blocking state of the transparent display panel.

Yet another object of the present disclosure is to provide a display device and a method thereof which may control a setting related to an output of an image through a transparent display panel according to an ambient illuminance.

Still yet another object of the present disclosure is to provide a display device and a method thereof which may control a setting related to an output of an image through a transparent display panel according to each region of the transparent display panel being light-blocked.

In order to achieve the object, a display device according to an embodiment of the present disclosure may include: a display panel which has light transmissivity; a light blocking film which blocks light transmitted through the display panel; and a controller, and the controller may confirm a light blocking state of the display panel corresponding to a region where the light is blocked within an entire region of the display panel, determine a setting related to an output of a screen through the display panel based on the light blocking state, output a first image including a background through the display panel when the determined setting is a first setting corresponding to light blocking, and output a second image in which the background is removed from the first image through the display panel when the determined setting is a second setting corresponding to light transmission.

In order to achieve the object, an operating method of a display device according to an embodiment of the present disclosure may include: an operation of confirming a light blocking state of a display panel having transmissivity corresponding to a region where light transmitted through the display panel is blocked by a light blocking film within an entire region of the display panel; an operation of determining a setting related to an output of a screen through the display panel based on the light blocking state; and an operation of outputting a predetermined image through the display panel according to the determined setting, and the operation of outputting the predetermined image may include an operation of outputting a first image including a background through the display panel when the determined setting is a first setting corresponding to light blocking; and an operation of outputting a second image in which the background is removed from the first image through the display panel when the determined setting is a second setting corresponding to light transmission.

Effects of the display device and the method thereof according to the present disclosure are described as follows.

According to at least one embodiment of the present disclosure, a setting related to an output of an image through a transparent display panel can be controlled according to a light blocking state of the transparent display panel, thereby enhancing visibility of an image.

According to at least one embodiment of the present disclosure, the setting related to the output of the image through the transparent display panel can be controlled according to an ambient illuminance, thereby improving the visibility of the image to a surrounding environment.

According to at least one embodiment of the present disclosure, the setting related to the output of the image through the transparent display panel can be controlled according to whether each region of the transparent display panel being light-blocked.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the idea and scope of the present disclosure will become apparent to those skilled in the art from this detailed description.

### BRIEF DESCRIPTION OF THE DRAWINGS

Fig. 1 is a block diagram of a display device according to an embodiment of the present disclosure.
Fig. 2 is a block diagram of a remote control device according to an embodiment of the present disclosure.
Fig. 3 is a diagram illustrating an example of a configuration of the remote control device according to an embodiment of the present disclosure.
Fig. 4 is a diagram illustrating an example of utilizing the remote control device according to an embodiment of the present disclosure.
Figs. 5A to 5C are diagrams for describing a light blocking state according to an embodiment of the present disclosure.
Figs. 6A and 6B are diagrams for describing a non-electronic light blocking scheme according to an embodiment of the present disclosure, and Fig. 6C is a diagram for describing an electronic light blocking scheme according to another embodiment of the present disclosure.
Figs. 7A and 7B are diagrams for describing various forms of a display according to an embodiment of the present disclosure.
Figs. 8 and 9 are flowcharts for an operating method of a display device according to an embodiment of the present disclosure.
Figs. 10 to 13B are diagrams referenced for describing an operation of a display device according to an embodiment of the present disclosure.

### DETAILED DESCRIPTION

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

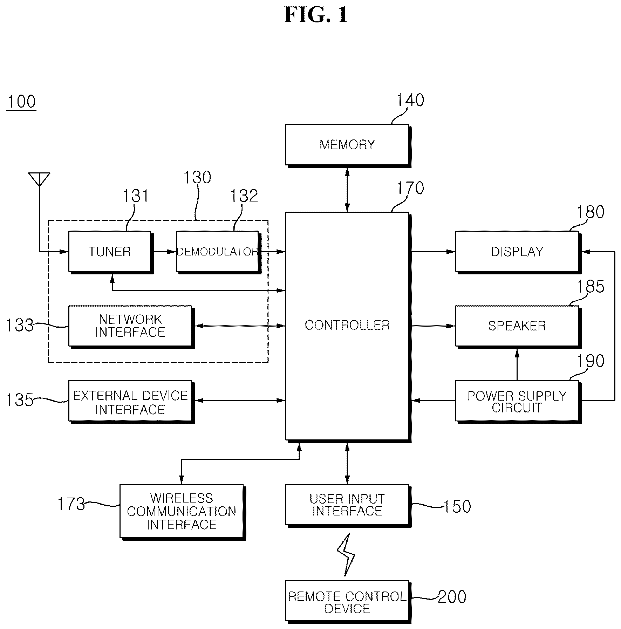

FIG. 1 is a block diagram showing a configuration of a display device according to an embodiment of the present disclosure.

Referring to FIG. 1, a display device 100 may include an image receiver 130, an external device interface 135, a memory 140, a user input interface 150, a controller 170, a wireless communication interface 173, a display 180, a speaker 185, and a power supply circuit 190.

The image receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 the speaker 185.

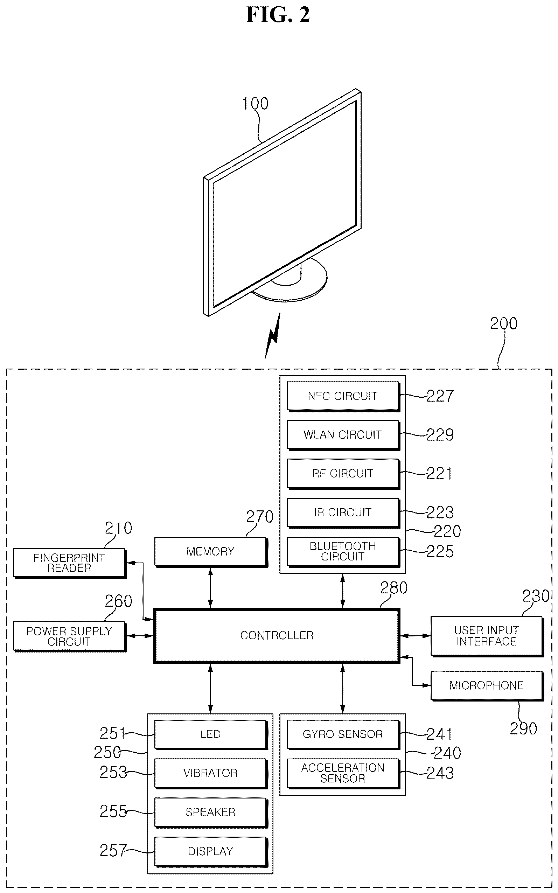

Next, a remote control device according to an embodiment of the present disclosure will be described with reference to FIGS. 2 to 3.

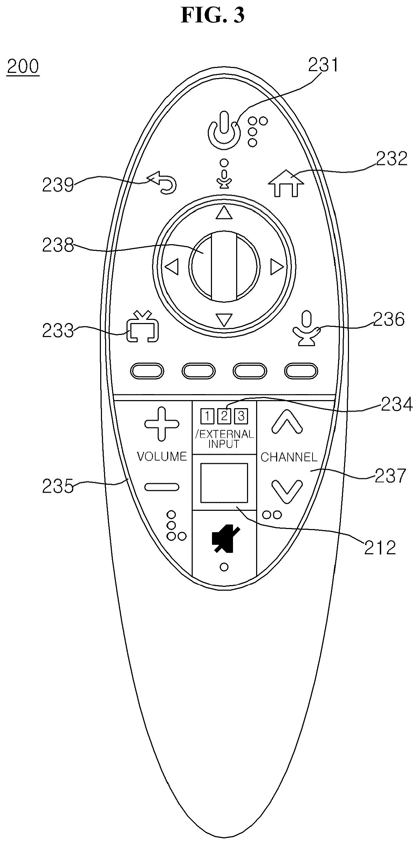

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication unit 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication unit 225.

Also, the microphone 290 of the remote control device 200 may obtain a speech.

A plurality of microphones 290 may be provided.

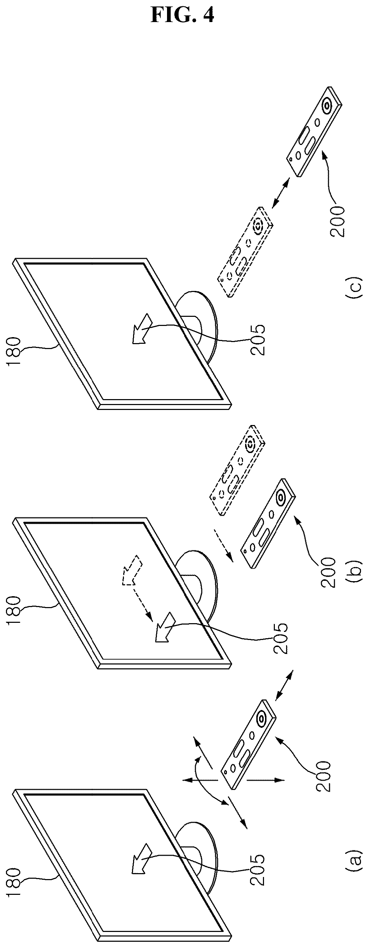

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

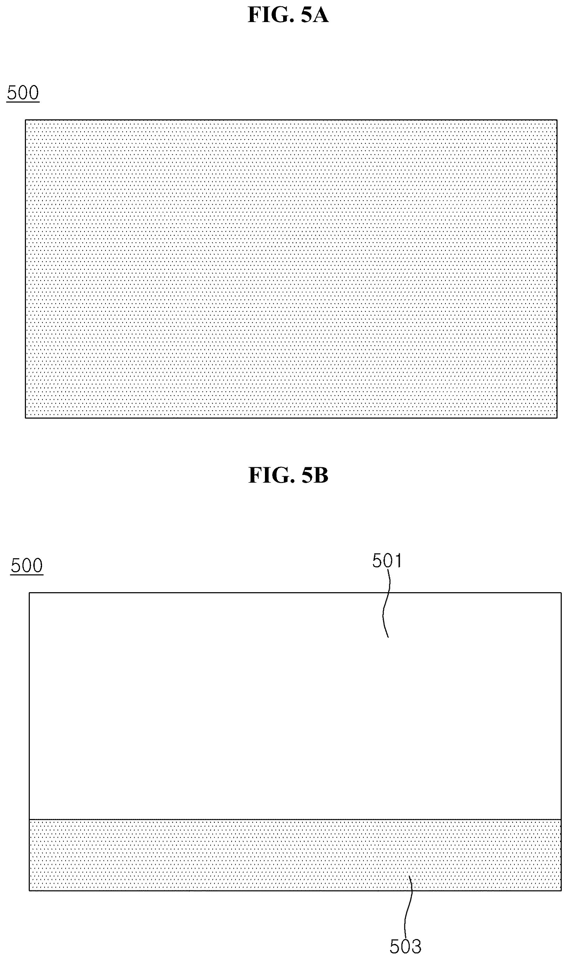

FIGS. 5A to 5C are diagrams illustrating a light blocking state according to an embodiment of the present disclosure.

In one embodiment, the light blocking state of the display 180 may be a state which is determined according to an area of the light blocking area where a light is blocked among the entire area of the display 180. For example, the light blocking state may be any one of a full light blocking state in which the entire area of the display 180 is blocked from the light, a partial light blocking state in which a partial area of the display 180 is blocked from the light, or a non-light blocking state in which the entire area of the display 180 is not blocked from the light.

The full light blocking state may be referred to as a first light blocking state. The partial light blocking state may be referred to as a second light blocking state. The non-light blocking state may be referred to as any one of a transparent state, a light transmitting state, or a third light blocking state.

FIG. 5A may represent the full light blocking state, which indicates a state in which the entire area 500 of the display 180 is light-blocked.

FIG. 5B may show the partial light blocking state in which a first partial area 501 of the entire area 500 of the display 180 is light-transmitted and a second partial area 503 is blocked.

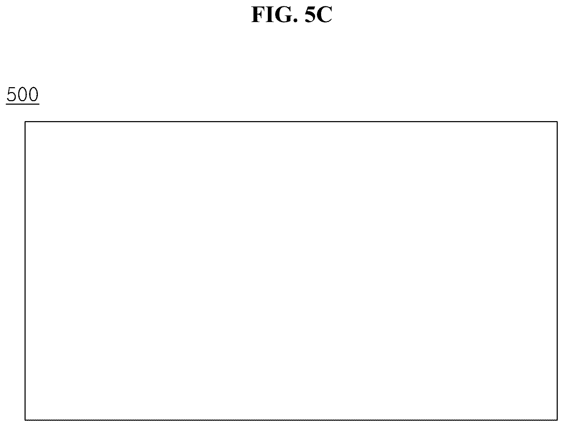

FIG. 5C may represent the non-light blocking state in which the entire area 500 of the display 180 is light-transmitted.

In another embodiment of the present disclosure, the light blocking state of the display 180 may include the degree of light blocking of the entire area of the display 180 or the degree of light blocking of a partial area. The degree of light blocking may be a concept that is inversely proportional to a transparency.

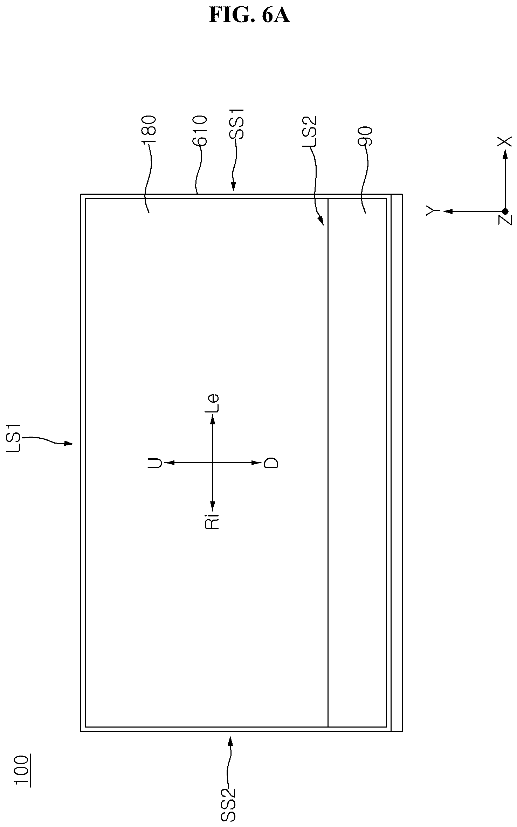

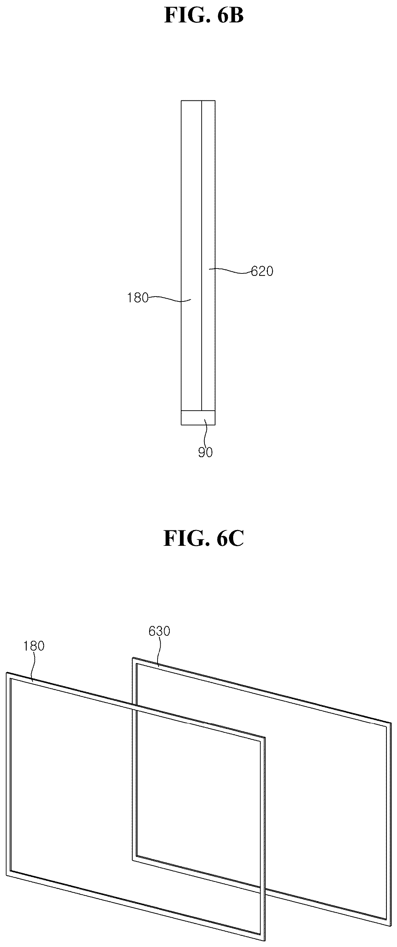

FIGS. 6A and 6B are diagrams illustrating a non-electronic light blocking method according to an embodiment of the present disclosure, and FIG. 6C is a diagram illustrating an electronic light blocking method according to another embodiment of the present disclosure.

The light blocking state of the display 180 may be controlled through a non-electronic light blocking method or an electronic light blocking method.

In one embodiment, a light blocking film may be provided on one side of the display 180. The light blocking film may block light transmitted to the area of the display 180.

The light blocking film may be either the light blocking film of a first type or the light blocking film of a second type. The light blocking film of the first type may be a non-electronic light blocking film, and the light blocking film of second type may be an electronic light blocking film.

The light blocking film of the first type may be made of any one of a polymer film, an opaque film, and a fiber film made of fiber, but this is only an example.

The light blocking film of the second type may be an electronic light blocking film such as a Liquid Crystal Display (LCD) panel.

In the case of the non-electronic light blocking method, the size of the light blocking area of the display 180 may be adjusted according to a physical movement of the light blocking film of the first type.

In the case of the electronic light blocking method, a transmittance of the area of the display 180 is electrically controlled, so that the light blocking state of the display 180 may be adjusted. The electronic light blocking method may be referred to as a liquid crystal shutter method.

First, the non-electronic light blocking method is explained.

Referring to FIG. 6A, the display device 100 may include a display 180, a side frame 610, and a housing 90. The display 180 may display an image. The side frame 610 may extend along a perimeter of the display 180. The housing 90 may be located below the display 180 and the side frame 610. Alternatively, the housing 90 may be located on a upper side, a left side, or a lower side the display 180 and the side frame 610.

The display 180 may include a first long side (LS1), a second long side (LS2) opposing the first long side (LS1), a first short side SS1 adjacent to the first long side (LS1) and a second long side LS2 and a second short side (SS2) opposite to the first short side (SS1).

Meanwhile, for convenience of explanation, a length of the first and second long sides LS1 and LS2 is shown and described as being longer than a length of the first and second short sides SS1 and SS2, it may be possible that the length of the first and second long sides LS1 and LS2 is approximately the same as or longer than the length of the first and second short sides (SS1, SS2).

A direction parallel to the long sides LS1 and LS2 of the display 180 may be referred to as a left and right direction. The direction parallel to the short sides SS1, SS2 of the display 180 may be referred to as a vertical direction. The direction perpendicular to the long sides (LS1, LS2) and short sides (SS1, SS2) of the display 180 may be referred to as a front-back direction.

The direction in which the display 180 displays the image may be referred to as a front (z), and the opposite direction may be referred to as a rear (-z). The first short side (SS1) may be referred to as a left side (x, Le). The second short side (SS2) may be called a right side (-x, Ri). The first long side (LS1) may be called a upper side (y, U). The second long side (LS2) may be called a lower side(-y, D).

The interior of the housing 90 may be provided with the light blocking film, one or more rollers that move the light blocking film upward, and one or more motors that drive the one or more rollers.

The first type of light blocking film may be located behind the rear surface of the display 180 and may be moved in the vertical direction of the display 180. The first type of light blocking film may have an area that may cover the back of the display 180.

The light blocking film of the first type may be placed on the upper surface of the display 180, has the shape of a curtain slide, and may be moved up and down.

The controller 170 of the display device 100 may control the movement of the light blocking film of the first type by controlling one or more motors provided inside the housing 90.

Referring to FIG. 6B, a light blocking film of the first type 620 covering the rear surface of the display 180 is shown. The light blocking film of the first type 620 may be pulled out or retracted from the housing 90 .

In FIG. 6B, the light blocking state of the display 180 may be the full light blocking state.

Next, the electronic light blocking method will be described with reference to FIG. 6C.

Referring to FIG. 6C, the display 180 and the light blocking film of the second type 630 disposed behind the display 180 are shown. The light blocking film of the second type 630 may be a liquid crystal display (LCD) panel.

The controller 170 of the display device 100 may control the LCD panel 630 to control the transmittance corresponding to the partial area or the entire area of the display 180.

The controller 170 or an image driving circuit (not shown) may transmit a control signal that controls an arrangement of liquid crystal molecules corresponding to the area of the display 180 to the LCD panel 630, thereby adjusting the transmittance for the corresponding area. The image driving circuit may be included in the controller 170 or may be an element provided separately from the controller 170.

The control signal that controls the arrangement of liquid crystal molecules may be a voltage signal that controls the voltage applied to a liquid crystal layer of the LCD panel 630.

The LCD panel 630 may include two polarizing plate, a thin film transistor (TFT), and the liquid crystal layer. Each of the two polarizers may transmit a light in one direction and block the light in the other direction. The TFT may be a switching device that applies and blocks a voltage signal that controls the arrangement of liquid crystal molecules to the liquid crystal layer. The Liquid crystal molecules in the liquid crystal layer may be aligned according to the voltage signal received from the TFT. The light may be passed or blocked according to the arrangement of the liquid crystal molecules.

The Light may pass through a first polarizing plate and then pass through the liquid crystal layer. When the polarization direction of the light changes in the liquid crystal layer, it may pass through a second polarizing plate. If the polarization direction of the light changes according to the arrangement of the liquid crystal, an amount of the light passing through the second polarizing plate may vary. Because of this, the transmittance of the LCD panel 630 may be adjusted.

The image driving circuit may adjust the transmittance of a specific area by applying or blocking a voltage only to pixels of the specific area through electrodes arranged in a matrix form on the LCD panel 630.

The display device 100 may adjust the transmittance of the specific area of the display 180 to generate a light blocking area and a non-light blocking area.

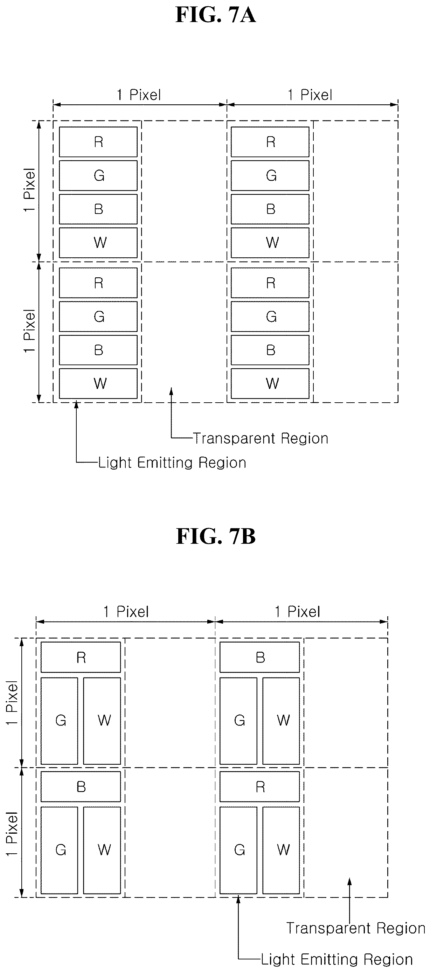

FIGS. 7A and 7B are diagrams illustrating various types of display according to embodiments of the present disclosure.

Referring to FIG. 7A, a pixel may include a light emitting region and a transparent region. In the light-emitting area, subpixels of RGBW (Red, Green, Blue, White) may be arranged vertically, and the light-emitting area without subpixels may be placed next to the light-emitting area.

Accordingly, the display 180 having a plurality of pixels may not only display an image but also transmit a light. The display 180 may be referred to as a transparent display panel or a transparent OLED (Organic Light Emitting Diode) panel.

Referring to FIG. 7B, a pixel may include a light emitting region and a transparent region. In the light-emitting area, subpixels of RGW (Red, Green, White) or BGW (Blue, Green, White) may be arranged adjacent to each other, and the light-emitting area without subpixels is next to the light-emitting area.

Accordingly, the display 180 having the plurality of pixels may not only display the image but also transmit the light. The display 180 may be referred to as a transparent display panel or a transparent OLED panel.

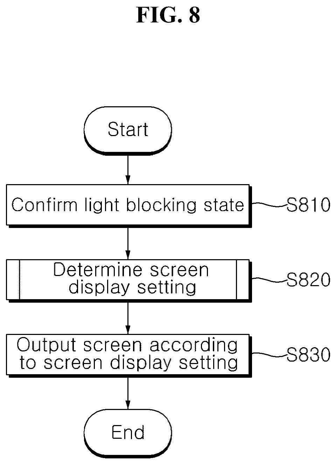

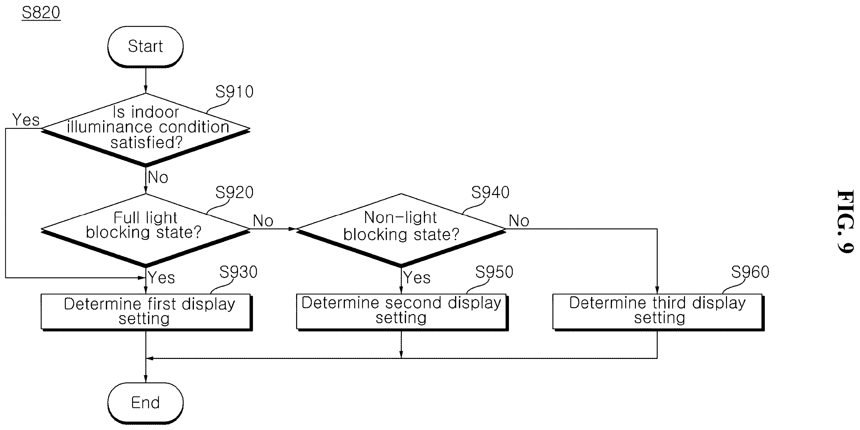

Figs. 8 and 9 are flowcharts for an operating method of a display device according to an embodiment of the present disclosure.

Referring to FIG. 8, the display device 100 may confirm a light blocking state of the display 180 in operation S810. The display device 100 may determine the light blocking state of the display 180 as any one of a full light blocking state in which an entire region of the display 180 is light-blocked, a partial light blocking state in which a partial region of the display 180 is light-blocked, and a non-light blocking state in which the entire region of the display 180 is not light-blocked.

The display device 100 may, in operation S820, determine a setting related to an output of a screen through the display 180 (hereinafter, referred to as a screen display setting) based on the light blocking state of the display 180. Here, the screen display setting may include whether to output a background, screen brightness, features of a text such as characters, numbers, symbols, etc., included in the screen (e.g., thickness, font, size, etc.).

The display device 100 may output a predetermined image through the display 180 according to a display screen setting in operation S830.

The screen display setting according to an embodiment of the present disclosure will be described with reference to FIG. 9.

Referring to FIG. 9, the display device 100 may determine whether a condition related to an indoor illuminance is satisfied in operation S910.

For example, the display device 100 may determine that the condition related to the indoor illuminance is satisfied when a current time corresponds to a nighttime corresponding to a time zone from sunset to sunrise. Meanwhile, the display device 100 may determine that the condition related to the indoor illuminance is not satisfied when the current time corresponds to a daytime corresponding to a time zone from sunrise to sunset.

For example, the display device 100 may include a sensor that detects an indoor illuminance. In this case, the display device 100 may determine that the condition related to the indoor illuminance is satisfied when the indoor illuminance detected by the sensor is equal to or lower than a predetermined reference.

Meanwhile, the display device 100 may also determine, based on data regarding an illuminance of an indoor space received from an outside, the illuminance of the indoor space. For example, the remote control device 200 may include a sensor that detects the indoor illuminance. In this case, the remote control device 200 may transmit, to the display device 100, data corresponding to the indoor illuminance detected by the sensor.

The display device 100 may determine whether the light blocking state of the display 180 is the full light blocking state when the condition related to the indoor illuminance is not satisfied in operation S920.

In at least one of a case where the condition related to the indoor illuminance is satisfied and a case where the light blocking state of the display 180 is the full light blocking state, the display device 100 may determine the screen display setting as a first display setting, in operation S930. For example, in the first display setting, a background may be set to be output over an entire region of the display 180. For example, in the first display setting, the brightness of the screen may be set to a first brightness. For example, in the first display setting, the thickness of the text may be set to a first thickness. The size of the text may be set to a first size.

Here, the first lighting intensity may mean a default setting corresponding to a user's setting. That is, in the first display setting, the brightness of the screen may mean a default brightness, the thickness of the text may mean a default thickness, and the size of the text may mean a default size.

When the condition related to the indoor illuminance is not satisfied and the light blocking state of the display 180 is the non-light blocking state, the display device 100 may determine the screen display setting as a second display setting, in operation S940. For example, in the second display setting, the background may be set not to be output over the entire region of the display 180. For example, in the second display setting, the brightness of the screen may be set to a second brightness which exceeds the first brightness. For example, in the second display setting, the thickness of the text may be set to a second thickness which exceeds the first thickness. For example, in the second display setting, the size of the text may be set to a second size which exceeds the first size.

When the condition related to the indoor illuminance is not satisfied and the light blocking state of the display 180 is the partial light blocking state, the display device 100 may determine the screen display setting as a third display setting, in operation S950. For example, in the third display setting, the second display setting may be applied to a first partial region 501 transmitted by light within the entire region 500 of the display 180, and the first display setting may be applied to a second partial region 503 in which light is blocked.

Meanwhile, according to an embodiment of the present disclosure, in the operating method of the display device 100, the operation for the condition related to the indoor illuminance may be omitted.

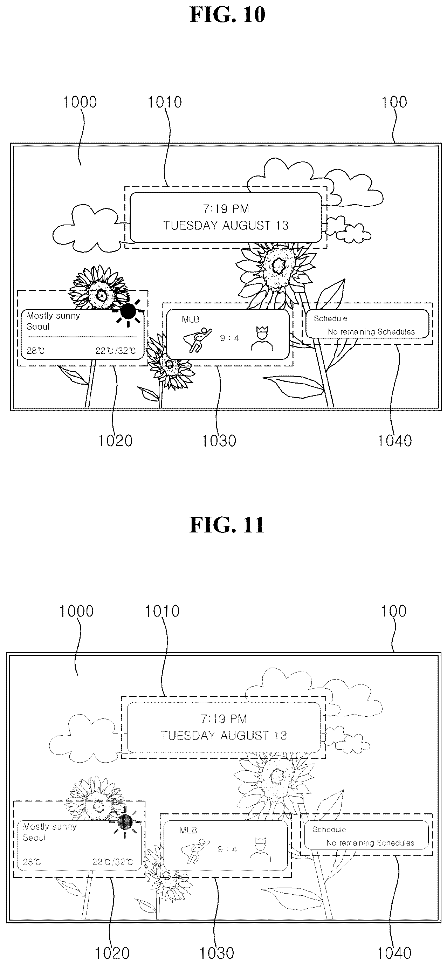

Referring to Figs. 10 and 11, the display device 100 may output a predetermined image 1000 through the display 180 according to the first display setting.

The predetermined image 1000 output according to the first display setting may include a background, and objects 1010 to 1040. For example, the predetermined image 1000 may include an object 1010 corresponding to corresponding to time, an object 1020 corresponding to weather, an object 1030 corresponding to an interested field, an object 1040 corresponding to a schedule, and the like.

According to an embodiment, the background included in the predetermined image 1000 may be changed according to a predetermined condition. For example, the background 1000 included in the predetermined image may be determined corresponding to a preset time zone. In this case, a first background in the morning, a second background in the afternoon, and a third background at night may be included in the predetermined image.

Referring to Fig. 10, when the light blocking state of the display 180 is the full light blocking state, the predetermined image 1000 may be output through the display 180. In this case, the background of the predetermined image 1000 may be output over the entire region of the display 180. Further, a text of the predetermined image 1000 displayed through the display 180 may be displayed with a first thickness.

As light transmitted to a region of the display 180 is blocked by the light blocking film 620 or 630 in the full light blocking state, a user may not perceive a rear space of the display 180, so the user may distinctly perceive only the screen.

Meanwhile, referring to Fig. 11, when the light blocking state of the display 180 is the non-light blocking state, visibility of the screen may be reduced in the case where the predetermined image 1000 is output through the display 180 according to the first display setting.

When the light transmitted to the region of the display 180 is not blocked by the light blocking film 620 or 630, the user may perceive the rear space of the display 180 jointly with the screen. In this case, visibilities of the objects 1010 to 1040 displayed on the screen may be reduced due to reasons such as the background displayed on the screen being perceived as blurred.

Meanwhile, when the condition related to the indoor illuminance is satisfied, it may be difficult to perceive the rear space of the display 180 even in the case where the light transmitted to the region of the display 180 is not blocked by the light blocking film 620 or 630. That is, when the indoor illuminance is satisfied, the user may clearly perceive only the screen despite the light blocking state of the display 180 being the non-light blocking state. Therefore, the display device 100 may output the screen according to the first display setting when condition related to indoor illuminance is satisfied.

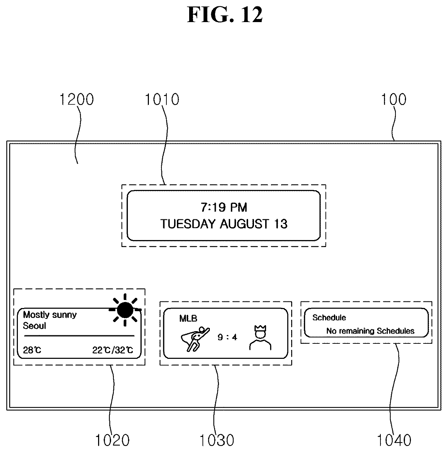

Referring to Fig. 12, when the light blocking state of the display 180 is the non-light blocking state, the display device 100 may output a predetermined image 1200 through the display 180 according to a second display setting.

The predetermined image 1200 output according to the second display setting may include the objects 1010 to 1040. The predetermined image 1200 output according to the second display setting may not include the background . That is, the predetermined image 1200 output according to the second display setting may correspond to an image in which the background is removed from the predetermined image 1000 output according to the first display setting. Hereinafter, the predetermined image 1000 including the background may be referred to as a first image, and the predetermined image 1200 with the background removed may be referred to as a second image.

When the light blocking state of the display 180 is the non-light blocking state, a region corresponding to the background in the entire region of the display 180 may be a region where no image is output. That is, the display device 100 may output the second image through a remaining region of the entire region of the display 180 excluding the region corresponding to the background. Therefore, the region corresponding to the background in the entire region of the display 180 may correspond to a light-transmitting region.

When the light transmitted through the display 190 is not blocked by the light blocking film 620 or 630, the background is removed from the screen output through the display 180, thereby improving the visibility of the screen. For example, the user may clearly perceive boundaries of the objects 1010 to 1040 included in the predetermined image. For example, the visibilities of the objects 1010 to 1040 included in the predetermined image may be improved.

Meanwhile, according to the second display setting, the text of the predetermined image 1200 output through the display 180 may be displayed with a second thickness that exceeds the first thickness. Through this, the visibilities of the objects 1010 to 1040, in particular, the text displayed on the screen may be improved.

Meanwhile, when the screen is output at a second brightness corresponding to the second display setting, which is brighter than a first brightness corresponding to the first display setting, the visibility of the screen may be further improved.

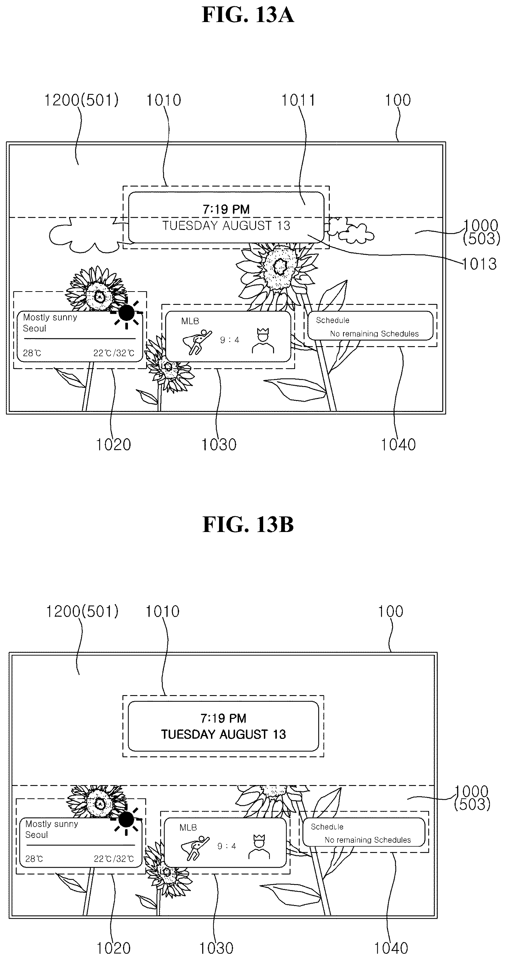

Referring to Figs. 13A and 13B, when the light blocking state of the display 180 is the partial light blocking state, the display device 100 may output a predetermined image through the display 180 according to a third display setting.

The predetermined image output according to the third display setting may include the objects 1010 to 1040.

Meanwhile, the background of the predetermined image may not be output in a first partial region 501, and the background of the predetermined image may be output in a second partial region 503. That is, the second image 1200 may be output in the first partial region 501, and the first image 1000 may be output in the second partial region 503. In this case, a portion of the second image 1200 corresponding to the first partial region 501 may be output in the first partial region 501. Further, a portion of the first image 1000 corresponding to the first partial region 503 may be output in the second partial region 503.

The text displayed in the first display region 501 may be displayed with the second thickness that exceeds the first thickness in the predetermined image output according to the third display setting. Meanwhile, the text displayed in the second display region 503 may be displayed with the first thickness in the predetermined image output according to the third display setting.

For example, referring to Fig. 13a, in the object 1010 corresponding to the time, a text displayed in a portion 1011 corresponding to the first display region 501 may be displayed with the second thickness. Meanwhile, in the object 1010 corresponding to the time, a text displayed in a remaining portion 1013 corresponding to the second display region 503 may be displayed with the first thickness.

According to an embodiment, the display device 100 may dynamically control the setting related to the output of the image through the display 180 depending on whether each region of the display 180 being light-blocked.

In response to a change in the setting for the light blocking of the display 180, whether each region of the display 180 is light-blocked may be sequentially changed. In this case, the display device 100 may determine a screen display setting for each region of the display 180 in response to whether each region of the display 180 being light-blocked.

For example, when the setting for the light blocking of the display 180 is changed from the full light blocking state to the non-light blocking state, a first-type light blocking film 620 that covers a rear surface of the display 180 may move in a downward direction. In this case, while the first-type light blocking film 620 moves in the downward direction, the display 180 may be sequentially light-transmitted from the top to the bottom. In this case, while the first-type light blocking film 620 moves in the downward direction, the display 180 may be sequentially light-transmitted from the top to the bottom.

In this case, the display device 100 may apply the second display setting to a portion through which light is transmitted and apply the first display setting to a remaining portion in which light is blocked, in the entire region of the display 180 while the first-type light blocking film 620 moves downward.

The display device 100 may determine whether each region of the display 180 is light-blocked by the first-type light blocking film 620. That is, the display device 100 may monitor the first partial region 501 and the second partial region 503.

According to an embodiment, the display device 100 may include an encoder that detects rotation of a motor providing driving force to move the light blocking film 620 in a predetermined direction. The encoder may be placed to correspond to the motor. The motor and the encoder may be placed inside a housing 90. For example, the encoder may be fixed to a shaft of the motor and rotate together with the motor shaft. In this case, the display device 100 may determine a rotational speed, a number of rotations, a rotational direction, etc., of the motor based on a signal output from the encoder, which corresponds to the rotation of the motor.

According to an embodiment, the display device 100 may include at least one sensor for detecting the light blocking film 620. The sensor may include an optical sensor, a capacitive sensor, an inductive sensor, a Hall sensor, a contact sensor, etc. In this case, the display device 100 may determine a position of the light blocking film 620 based on a signal output from the sensor. The sensor for detecting the light blocking film 620 may be placed in a side frame 610 and/or the housing 90.

Meanwhile, the display device 100 may continuously change a setting value for the screen corresponding to the screen display setting when a setting for light blocking of the display 180 is changed. For example, when the setting for the light blocking of the display 180 is changed from the full light blocking state to the non-light blocking state, the background on the screen may gradually disappear and the text displayed on the screen may gradually become thicker. For example, when the setting for the light blocking of the display 180 is changed from the non-light blocking state to the full light blocking state, the background on the screen may gradually appear and the text displayed on the screen may gradually become thinner.

The display device 100 may continuously change the setting value for the screen based on a speed at which the first-type light blocking film 620 moves, a time elapsed after the setting for the light blocking of the display 180, etc. For example, the faster the speed at which the first-type light blocking film 620 moves, the shorter a cycle at which the setting value for the screen may be changed.

Meanwhile, in the present disclosure, although description is made with reference to the first-type light blocking film 620, the same may be applied to a second-type light blocking film 630. For example, the display device 100 may control a voltage applied to the second-type light blocking film 630 so that the display 180 is sequentially light-blocked from one end to the other end.

In this case, the light blocking state of the display 180 may be the partial light blocking state. The display device 100 may control the setting related to the output of the image through the display 180 depending on whether each region of the display 180 being light-blocked by the second-type light blocking film 630.

As described above, according to at least one embodiment of the present disclosure, the setting related to the output of the image through the transparent display panel can be controlled according to the light blocking state of the transparent display panel, thereby improving the visibility of the image.

Further, according to at least one embodiment of the present disclosure, the setting related to the output of the image through the transparent display panel can be controlled according to an ambient illuminance, thereby improving the visibility of the image to a surrounding environment.

Further, according to at least one embodiment of the present disclosure, the setting related to the output of the image through the transparent display panel can be controlled according to whether each region of the transparent display panel being light-blocked.

Referring to Figs. 1 to 13B, a display device 100 according to an aspect of the present disclosure may include: a display panel 180 which has light transmissivity; a light blocking film 620 or 630 which blocks light transmitted through the display panel 180; and a controller 170, and the controller 170 may confirm a light blocking state of the display panel 180 corresponding to a region where the light is blocked within an entire region of the display panel 180, determine a setting related to an output of a screen through the display panel 180 based on the light blocking state, output a first image including a background through the display panel 180 when the determined setting is a first setting corresponding to light blocking, and output a second image in which the background is removed from the first image through the display panel 180 when the determined setting is a second setting corresponding to light transmission.

Further, according to an aspect of the present disclosure, the controller 170 may display a text included in the first image with a first thickness when the determined setting is the first setting, and display a text included in the second image with a second thickness exceeding the first thickness when the determined setting is the second setting.

In addition, according to an aspect of the present disclosure, the controller 170 may output a screen having a first brightness through the display panel 180 when the determined setting is the first setting, and output a screen having a second brightness which exceeds the first brightness through the display panel 180 when the determined setting is the second setting.

Further, according to an aspect of the present disclosure, when the determined setting is a third setting corresponding to partial light blocking, the controller 170 may output, through a first region in which the light is blocked in an entire region of the display panel 180, a part of the first image corresponding to the first region, and output, through a second region through which the light is transmitted in the entire region of the display panel 180, a part of the second image corresponding to the second region.

In addition, according to an aspect of the present disclosure, the controller 170 may determine the setting as the third setting when the light blocking film 620 or 630 are controlled so that the light is blocked or transmitted sequentially from one end to the other end of the display panel 180.

Further, according to an aspect of the present disclosure, the display device 100 may further include: a motor which provides driving force to the light blocking film 620 to move the light blocking film 620 in a predetermined direction; and an encoder which detects rotation of the motor, and the controller 170 may determine the first region and the second region based on a signal received from the encoder.

In addition, according to an aspect of the present disclosure, the light blocking film 630 using an electronic light blocking scheme may include a liquid crystal layer, and the controller 170 may determine the first region and the second region based on a voltage applied to the liquid crystal layer of the light blocking film 630.

Further, according to an aspect of the present disclosure, the display device 100 may further include a sensor which detects an indoor illuminance, and the controller 170 may determine the setting as the first setting when the indoor illuminance is equal to or lower than a predetermined reference, and determine the setting based on the light blocking state when the indoor illuminance exceeds the predetermined reference.

In addition, according to an aspect of the present disclosure, the controller 170 may determine the setting as the first setting when a current time corresponds to a nighttime, and determine the setting based on the light blocking state when the current time corresponds to a daytime.

Further, according to an aspect of the present disclosure, the controller 170 may control the display panel 180 so that the background gradually disappears in the screen output through the display panel 180 in response to the light blocking state of the display panel 180 being changed from the light blocking to the light transmission, and control the display panel 180 so that the background gradually appears in the screen output through the display panel 180 in response to the light blocking state of the display panel 180 being changed from the light transmission to the light blocking.

An operating method of a display device 100 according to an aspect of the present disclosure may include: an operation of confirming a light blocking state of a display panel 180 having transmissivity corresponding to a region where light transmitted through the display panel 180 is blocked by a light blocking film 620 or 630 within an entire region of the display panel 180; an operation of determining a setting related to an output of a screen through the display panel 180 based on the light blocking state; and an operation of outputting a predetermined image through the display panel 180 according to the determined setting, and the operation of outputting the predetermined image may include an operation of outputting a first image including a background through the display panel 180 when the determined setting is a first setting corresponding to light blocking; and an operation of outputting a second image in which the background is removed from the first image through the display panel 180 when the determined setting is a second setting corresponding to light transmission.

Further, according to an aspect of the present disclosure, the operation of outputting the predetermined image may include an operation of displaying a text included in the first image with a first thickness when the determined setting is the first setting; and an operation of displaying a text included in the second image with a second thickness exceeding the first thickness when the determined setting is the second setting.

In addition, according to an aspect of the present disclosure, the operation of outputting the predetermined image may include an operation of outputting a screen having a first brightness through the display panel 180 when the determined setting is the first setting; and an operation of outputting a screen having a second brightness which exceeds the first brightness through the display panel 180 when the determined setting is the second setting.

Further, according to an aspect of the present disclosure, when the determined setting is a third setting corresponding to partial light blocking, the operation of outputting the predetermined image may include, when the determined setting is a third setting corresponding to partial light blocking, an operation of outputting, through a first region in which the light is blocked in an entire region of the display panel 180, a part of the first image corresponding to the first region; and an operation of outputting, through a second region through which the light is transmitted in the entire region of the display panel 180, a part of the second image corresponding to the second region.

In addition, according to an aspect of the present disclosure, the operation of determining the setting may include an operation of determining the setting as the third setting when the light blocking film 620 or 630 are controlled so that the light is blocked or transmitted sequentially from one end to the other end of the display panel 180.

Further, according to an aspect of the present disclosure, the operation of outputting the predetermined image may include an operation of determining the first region and the second region based on a signal of an encoder detecting rotation of a motor providing driving force to the light blocking film 620 to move the light blocking film 620 in a predetermined direction.

In addition, according to an aspect of the present disclosure, the operation of outputting the predetermined image may include an operation of determining the first region and the second region based on a voltage applied to a liquid crystal layer of the light blocking film 630 using an electronic light blocking scheme.

Further, according to an aspect of the present disclosure, the operation of determining the setting may include an operation of determining the setting as a first setting when an indoor illuminance detected through a sensor is equal to or lower than a predetermined reference; and an operation of determining the setting based on the light blocking state when the indoor illuminance exceeds the predetermined reference.

In addition, according to an aspect of the present disclosure, the operation of determining the setting may include an operation of determining the setting as the first setting when a current time corresponds to a nighttime; and an operation of determining the setting based on the light blocking state when the current time corresponds to a daytime.

Further, according to an aspect of the present disclosure, the operation of outputting the predetermined image may include an operation of controlling the display panel 180 so that the background gradually disappears from the screen output through the display panel 180 in response to the light blocking state of the display panel 180 being changed from the light blocking to the light transmission; and an operation of controlling the display panel 180 so that the background gradually appears in the screen output through the display panel 180 in response to the light blocking state of the display panel 180 being changed from the light transmission to the light blocking.

Since the accompanying drawings are merely for easily understanding embodiments disclosed herein, it should be understood that the technical idea disclosed herein is not limited by the accompanying drawings, and all changes, equivalents or substitutions are included in the idea and technical scope of the present disclosure.

Meanwhile, an operation method of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

While the present disclosure has been particularly shown and described with reference to exemplary embodiments thereof, it will be understood by those of ordinary skill in the art that various changes in form and detail may be made herein without departing from the idea and scope of the present disclosure as defined by the following claims and such modifications and variations should not be understood individually from the technical idea or aspect of the present disclosure.

## Claims

1. A display device (100) comprising:
a display panel (180) having light transmissivity;
a light blocking film (620, 630) configured to block light transmitted through the display panel (180); and
a controller (170) configured to:
confirm a light blocking state of the display panel (180) corresponding to a region where the light is blocked within an entire region of the display panel (180),
determine a setting related to an output of a screen through the display panel (180) based on the light blocking state,
output a first image including a background through the display panel (180) when the determined setting is a first setting corresponding to light blocking, and
output a second image in which the background is removed from the first image through the display panel (180) when the determined setting is a second setting corresponding to light transmission.

2. The display device (100) of claim 1, wherein the controller (170) is configured to:
display a text included in the first image with a first thickness when the determined setting is the first setting, and
display a text included in the second image with a second thickness exceeding the first thickness when the determined setting is the second setting.

3. The display device (100) of claim 1 or 2, wherein the controller (170) is configured to:
output a screen having a first brightness through the display panel (180) when the determined setting is the first setting, and
output a screen having a second brightness exceeding the first brightness through the display panel (180) when the determined setting is the second setting.

4. The display device (100) of any one of claims 1 to 3, wherein, when the determined setting is a third setting corresponding to partial light blocking, the controller (170) is configured to:
output, through a first region in which the light is blocked in an entire region of the display panel (180), a part of the first image corresponding to the first region, and
output, through a second region through which the light is transmitted in the entire region of the display panel (180), a part of the second image corresponding to the second region.

5. The display device (100) of claim 4, wherein the controller (170) is configured to determine the setting as the third setting when the light blocking film (620, 630) is controlled so that the light is blocked or transmitted sequentially from one end to the other end of the display panel (180).

6. The display device (100) of any one of claims 1 to 5, further comprising:
a motor configured to provide driving force to the light blocking film to move the light blocking film (620) in a predetermined direction; and
an encoder configured to detect rotation of the motor,
wherein the controller (170) is configured to determine the first region and the second region based on a signal received from the encoder.

7. The display device (100) of any one of claims 1 to 5, wherein the light blocking film (630) using an electronic light blocking scheme includes a liquid crystal layer, and
wherein the controller (170) is configured to determine the first region and the second region based on a voltage applied to the liquid crystal layer of the light blocking film.

8. The display device (100) of any one of claims 1 to 7, further comprising:
a sensor configured to detect an indoor illuminance,
wherein the controller (170) is configured to:
determine the setting as the first setting when the indoor illuminance is equal to or lower than a predetermined reference, and
determine the setting based on the light blocking state when the indoor illuminance exceeds the predetermined reference.

9. The display device (100) of any one of claims 1 to 8, wherein the controller (170) is configured to:
determine the setting as the first setting when a current time corresponds to a nighttime, and
determine the setting based on the light blocking state when the current time corresponds to a daytime.

10. The display device (100) of any one of claims 1 to 9, wherein the controller (170) is configured to:
control the display panel (180) so that the background gradually disappears in the screen output through the display panel (180) in response to the light blocking state of the display panel (180) being changed from the light blocking to the light transmission, and
control the display panel (180) so that the background gradually appears in the screen output through the display panel (180) in response to the light blocking state of the display panel (180) being changed from the light transmission to the light blocking.

11. An operating method of a display device (100), comprising:
confirming a light blocking state of a display panel (180) having transmissivity corresponding to a region where light transmitted through the display panel (180) is blocked by a light blocking film (620, 630) within an entire region of a display panel (180);
determining a setting related to an output of a screen through the display panel (180) based on the light blocking state; and
outputting a predetermined image through the display panel (180) according to the determined setting,
wherein the outputting of the predetermined image includes:
outputting a first image including a background through the display panel (180) when the determined setting is a first setting corresponding to light blocking; and
outputting a second image in which the background is removed from the first image through the display panel (180) when the determined setting is a second setting corresponding to light transmission.

12. The operating method of a display device (100) of claim 11, wherein the outputting of the predetermined image includes:
displaying a text included in the first image with a first thickness when the determined setting is the first setting; and
displaying a text included in the second image with a second thickness exceeding the first thickness when the determined setting is the second setting.

13. The operating method of a display device (100) of claim 11 or 12, wherein the outputting of the predetermined image includes:
outputting a screen having a first brightness through the display panel (180) when the determined setting is the first setting; and
outputting a screen having a second brightness exceeding the first brightness through the display panel (180) when the determined setting is the second setting.

14. The operating method of a display device (100) of any one of claims 11 to 13, wherein the outputting of the predetermined image includes:
when the determined setting is a third setting corresponding to partial light blocking,
outputting, through a first region in which the light is blocked in an entire region of the display panel (180), a part of the first image corresponding to the first region; and
outputting, through a second region through which the light is transmitted in the entire region of the display panel (180), a part of the second image corresponding to the second region.

15. The operating method of a display device (100) of any one of claims 11 to 14, wherein the determining of the setting includes:
determining the setting as a first setting when at least one of a case where an indoor illuminance detected through a sensor is equal to or lower than a predetermined reference and a case where a current time corresponds to a nighttime; and
determining the setting based on the light blocking state when at least one of a case where the indoor illuminance exceeds the predetermined reference and a case the current time corresponds to a daytime.
